# EUROPEAN PATENT SPECIFICATION

(11) **EP 1 607 820 B1**
(45) Date of publication and mention of the grant of the patent: **09.09.2009**
(21) Application number: 05012876.8
(22) Date of filing: 15.06.2005
(51) Int. Cl.: G05D 23/19, F24D 19/10, F23N 5/02

(54) **Heating control system**
Heizungsregelsystem
Système de régulation de chauffage

(30) Priority: 15.06.2004 GB 0413304
(43) Date of publication of application: 21.12.2005
(73) Proprietor: Sabien Technology IP Limited, 47 Ballylough Road Donaghcloney Craigavon, BT66 7PQ (GB)
(72) Inventor: Hutchinson, Trevor, Donaghcloney, Craigavon, BT66 7PQ (GB)
(74) Representative: Wallace, Alan Hutchinson

(56) References cited:
- EP-A- 1 310 736
- US-A1- 2002 193 890
- US-B1- 6 522 954

## Description

### Field of the Invention

The present invention relates to heating systems. The invention relates particularly to controllers for boiler systems.

### Background to the Invention

In conventional boiler systems, the firing of fuel burners depends directly on the measured temperature of water flowing to and from the boiler. Water temperature is typically monitored by a thermostat which causes one or more burner stages to fire when the detected water temperature falls below a pre-set threshold and causes the burners to stop firing when the water temperature exceeds a pre-set threshold.

As a result, the burners tend to be fired and stopped relatively frequently and in relatively short cycles. This is considered to be fuel inefficient.

United States Patent application US 2002/193890, United States Patent US 6522954 and European Patent application EP 1310736 each discloses a boiler system that is conventional in that, when a burner stage is called, the burner is activated irrespective of the temperature in the system. These systems therefore suffer from the problem that the burners can be fired and stopped relatively frequently and in relatively short cycles

It would be desirable therefore to provide a boiler control system that reduces energy consumption and increases fuel efficiency while satisfying the load demands on the system.

### Summary of the Invention

Accordingly, a first aspect of the invention provides a controller for a boiler system as claimed in claim 1.

In preferred embodiments, the controller is arranged to adjust one or more of said operating parameters in response to environmental conditions including, advantageously, detected outdoor temperature and/or detected indoor temperature and/or detected residual heat characteristics of the respective boiler and/or detected flow medium temperature and/or detected return medium temperature.

Preferably, in respect of a first burner stage, the controller compares the rate of change of temperature of the medium in the flow pipe and/or in the return pipe against a first, or a respective, operating parameter whose value defines a threshold for the rate of fall of temperature, and causes the first burner stage to be implemented when the rate of fall of temperature of the medium in the flow pipe and/or in the return pipe exceeds the rate indicated by said first, or respective, operating parameter.

Preferably, in respect of a second, or subsequent, burner stage, the controller compares the rate of change of temperature of the medium in the flow pipe and/or in the return pipe against a second, or respective, operating parameter whose value defines a threshold for the rate of rise of temperature, and causes the second burner stage to be implemented when the rate of rise of temperature of the medium in the flow pipe and/or in the return pipe is below the rate indicated by the second, or respective, parameter.

Advantageously, in respect of a first burner stage, the controller compares the temperature of the medium in the flow pipe and/or in the return pipe against a third, or respective, operating parameter whose value defines a threshold temperature, and causes the first burner stage to be implemented when the temperature of the medium in the flow pipe and/or in the return pipe is less than temperature indicated by the third, or respective, parameter.

A second aspect of the invention provides a method of controlling the firing of said at least one burner as claimed in claim 7.

A third aspect of the invention provides a boiler system comprising one or more controllers of the first aspect of the invention.

It is found that boiler control systems embodying the invention can (in comparison with conventional boiler control systems) increase burner efficiency, reduce energy consumption, lower emissions and extend the life span of the boiler and burner.

The boiler control system may be used in systems comprising one or more single stage and/or one or more multi-stage burners. The boiler control system may be referred to as a sequence controller as it controls the firing sequence of the, or each, burner in a boiler system.

The preferred system includes a controller that monitors and analyses water temperatures from the boiler flow and boiler return systems, conveniently at regular intervals, for example every 10 seconds. The intervals may be adjusted to suit site conditions. Monitoring water temperature allows the preferred system to learn from the operating environment and to adjust the operation of the boiler system accordingly, for example by adjusting the respective values of one or more operating parameters.

The preferred system provides a load compensating aspect and may compensate for direct or system load demands and/or other load demands.

When a burner terminates a fire, it has typically been satisfied by a control device, for example a thermostat, that cuts off the electrical supply to the burner. A thermostat, or other control device, typically terminates a boiler fire when a pre-set temperature threshold has been detected by the thermostat. Once a burner terminates a fire, residual heat in the combustion chamber of the boiler continues to raise the temperature of the water (or other medium)in the boiler system until a residual heat peak has passed.

In the boiler combustion area, the generated heat (typically 1200°C at the centre of the flame and about 800°C at its extremity) from the burner fire continues to transfer heat to the water after the burner terminates its fire. The generated heat and subsequent transfer of the heat to the circulating flow water temperature after the flame has been removed is called residual heat gain.

The amount of residual heat gain imparted to the water is dependent on two main factors. The first factor is the length of the burner run, i.e. the length of time for which the burner was firing before being cut off. The shorter the burner run, the less the residual heat gain and, as the burner run time increases, so does the residual heat gain up to a point where a peak is reached. The second factor is a chilling process from the flue of the boiler system and the flow of air through the combustion area of the boiler at ambient temperature to assist in the combustion process and the purging period. Residual heat gain has a peak after which the water temperature gradually decays to the point where the burner will be triggered to fire again by a detected drop in flow water temperature to a pre-set threshold. This may be defined by, for example, the hysteresis of the thermostat.

In preferred embodiments, the controller monitors and records water temperature in the boiler flow and/or boiler return pipes. Advantageously, this monitoring process may be used to monitor and to characterise residual heat gain and subsequent heat loss. The controller is able to establish the exact amount of residual heat gain and to establish the time taken to reach the residual heat peak. The controller may plot residual heat gain versus the time taken to reach residual heat peak and may compare this with known patterns of residual heat gain/residual heat peak from a database comprising corresponding statistics from site tests.

Hence, the preferred controller may gather information describing variable parameters of residual heat gain from one day to the next and/or from one burner fire to the next. The flow water temperature pattern to reach its residual heat gain peak versus the time to reach its peak may serve as a characteristic of the system or burner cycle (a burner cycle being the period from the beginning of a burner run to the beginning of the next burner call to fire.)

When the increase in water temperature, directly due to residual heat gain, has reached its peak, the preferred controller monitors the rate of water temperature loss in the boiler flow. The controller may make a comparison of the rate of flow water temperature loss after residual heat peak against reference data, e.g. obtained from known site history statistics. The rise in residual heat gain and the rate of temperature loss after reaching the residual heat peak varies from site to site and at times from one fire to the next. The temperature profile in reaching residual heat peak is normally different to the temperature decay profile after the peak has been reached and for this reason it is preferred to monitor each independently and to treat each as separate conditions or characteristics for the self-learning process.

Typically, the higher the water temperature, as determined for example by the boiler thermostat setting, the slower the rate of residual heat gain and the faster the rate of temperature loss. Temperature loss of residual heat is also dependent on the length of the previous burner run and the hysteresis of the thermostat (or other control device).

In preferred embodiments, the controller monitors and records water flow temperature and makes decisions, for example as to when to cause a burner to fire, based on the rate of water temperature gain and/or loss. Hence, the preferred controller controls each site, or boiler system, in accordance with its respective characteristics.

It is noted that the residual heat characteristics of a system normally depend on climatic, or environmental, conditions as well as on boiler size, flue dimension, boiler location, exposure and ambient temperature. It is further observed that atmospheric pressure, low cloud, cloud density, wind, wind direction and solar gain may each influence the heat characteristics of a boiler system and should advantageously be taken into consideration when controlling burner firing.

For example, some boilers are installed at locations where the flue design contributes to excessive combustion area heat loss. The boiler can be triggered by this condition as opposed to, or as well as, a drop in return temperature caused by system demand.

In preferred embodiments, the controller monitors residual heat gain and/or loss patterns after at least some, and preferably each, burner fire. This allows abnormal situations to be identified and appropriate action to be taken (e.g. adjustment of operating parameters). An illustration of this is the wind factor the effect of which may vary from day to day. For example, combining winds from an easterly or north easterly direction with low ambient temperatures can cause energy consumption to rise by 70% compared to a still calm day. In cold windy conditions the residual heat gain peak is less and takes a shorter time to reach the peak. It also causes a faster fall rate in water temperature. Hence, in order that the controller may respond appropriately to operating conditions, it is desirable to learn the characteristics and patterns of the residual heat gain heating curve as well as the curve of the rate of temperature decay.

Conventionally, when a burner is called to fire, the water temperature at the boiler flow outlet may have only dropped by a few degrees from its peak temperature. It is not uncommon for a thermostat bandwidth to be between 1°C and 3°C. This produces a pattern of short burner fires which are inefficient. With each call for the burner to fire, the first action by a burner control unit is normally to clear the combustion chamber/area of the boiler. This is usually called the purge period. Typically, during the purge period, a motor fan draws in air at ambient temperature and exhausts the combustion area of any unburned fuel which may have accumulated in the chamber during the rest period (i.e. the period between termination of one fire and the call for a subsequent fire). Purging exhausts the accumulation of fuel which could otherwise explode when the boiler ignition sequence is enabled.

The burner controller may also incorporate other safety features into its operating sequence before it eventually allows fuel into the combustion chamber. Excess air, which can typically be an increase between 9% and 25% above that which is theoretically required for full combustion depending on the fuel type, is also normally supplied to the chamber to enhance firing and minimise the quantity of unused fuel particles after firing. The air intake for both the combustion purge process and the excess air (which are at ambient temperature) has a chilling affect on the water circulating through the boiler block. The colder the ambient temperature is, the faster the temperature of the water in the boiler block decays. The higher the frequency of boiler fires, the greater the loss in water temperature and this means a lower efficiency. This is particularly significant in multi-boiler sites where short fires/cycles from one boiler can trigger other linked boilers to fire prematurely due to the associated drop in flow water temperature. If the thermostat hysteresis is relatively small this wasteful sequence is repeated many times. This excessive intake of air from frequent burner fires looses energy. The chilling of the combustion area from the excess air intake creates a bigger load demand on the boiler system than is necessary especially when another boiler is fired prematurely as a result. Replacing the pattern of short inefficient and uneconomical fires into more meaningful and beneficial patterns is therefore desirable.

Short fires mean less residual heat gain and a faster decay rate from the residual heat peak which in turn has the result of firing the burner again after a short rest period. The more burner fires the greater the loss of water temperature due to the air intake. Longer burner fires mean more residual heat gain which delays the next burner fire due to the higher temperature peak and a longer temperature decay. Longer burner fires also give rise to fewer fires and fewer air intake occurrences.

In the preferred embodiment, the controller allows for the creation of a period of time to elapse between the instant when a burner is called to fire and the instant when it actually fires, the period advantageously being dependent on the rate of flow and/or return temperature decay (versus time). In determining this period, the controller may take into account the thermostat bandwidth (or equivalent parameter of another control device) and the burner's ability to raise water temperature. It is undesirable to allow flow water temperature to fall after a burner call to the extent that it takes more fuel to get the flow temperature back up, especially as the second or third stages of fire typically each consume considerably more fuel than the first stage fire.

The preferred controller allows for, or creates, a time interval between the different stages of burner fire. This timed interval typically varies with burner capacity, make of burner and type of fuel. By monitoring flow (and/or return) water temperatures at regular intervals, the controller can analyse the operational demands placed on a boiler. Monitoring the flow water temperature during the first stage of fire to establish if there is an associated rise in water temperature is therefore advantageous. Hence, the controller preferably monitors heat gain (in the flow water temperature) against time for the first stage fire. When, or before, the second stage (when present) is called (more fuel is introduced into the combustion chamber at this stage together with more air), the controller calculates if the second stage fire can be delayed and, if so, by how long. The controller advantageously determines if it would be more economical to maintain the first stage fire given the known value of the flow water temperature, the band width of the thermostat and/or the rate at which the flame, or burner, is able to transfer heat from the first stage fire. In certain situations where all the zone circuit modulating valves have closed and the water circulation has a short loop between the flow and return close to the boiler, any call for the burner to fire due to flue loss may be restricted by the controller since the controller advantageously identifies such a situation as a non-loading demand call due to the high return temperature being identical, or substantially identical, to the flow temperature.

In systems where the boiler employs more than a two stage firing sequence, the controller may apply the same control techniques to the firing of the third (and any subsequent) stages as are described above in connection with the second stage. Hence, the controller monitors flow water temperature over time for the first and second stage fires and, when a third, or subsequent, stage is called to fire, the controller may use the techniques described above to determine when the third, or subsequent stage should be introduced.

So far only the flow water temperature has been considered in detail. The return water temperature is now considered. When a burner has just terminated a fire, the return water has arrived back at the boiler after circulating through the heating system. Commercial buildings are commonly divided into a number of heating zones depending on the size of the building and the heating requirements which vary depending on occupational use. Some of the heating zones may service the colder side of a building and therefore return a return water at a different temperature from zones that face the warmer side of the building. The design of the building can have an influence on the drag factor associated with the return water temperature as it arrives back at the boiler. For example, high rise buildings can have a different return drag factor than a single storey structure of similar size. By the time the flow water has reached the farthest point in the heating system and has returned to the boiler, the current flow water temperature at the boiler may be dropping while the return may be rising as a result of the previous burner fire.

It is advantageous, therefore, to monitor the flow and return temperatures as separate conditions, or characteristics, of the system. Additionally, the relationship between the flow and return temperatures may be monitored as a characteristic of the system and used to adjust operating parameters. The return water temperature may fluctuate as the return water arrives at the boiler via different zone return water temperature values. This is especially the case in toilet areas where windows are inclined to be open throughout the day. This allows heat to escape causing a loading demand from the corresponding zone at a time when one or all of the other zones may be satisfied (i.e. no loading demand). As zone circuits start to open either collectively or individually, the return water temperature is usually subject to significant variations, not least because of modulating valves and varying water pipe diameters in respective zones. The irregular return water temperature variation may be enough to trigger a boiler (or boilers in a multi-boiler system) to fire and this may result in the problems associated with short burner fires described above.

Return water temperature may also serve as an indicator of other changes in system demand. In preferred embodiments, the controller has access to a database of known, or reference, return water values that are pertinent to the system of which it is part, and uses these to make a comparison with detected current return water temperature values. Advantageously, the controller maintains a record of the return water temperature values of the system during use. Such a record provides a reference for changing ambient conditions. For example, a cold wind on one side of a building may give rise to a lower ambient temperature than the sheltered side of the same building. It is not uncommon to have a 3-4°C difference from one side of a building to another. The effect this has is to reduce the return water temperature due to additional heat loss through the building fabric of the exposed side of the building. Higher winds and driving rain may also produce additional heat loss through the building fabric which in turn reduces return water temperature. In preferred embodiments, the controller accommodates such conditions by means of sampling water temperature frequently and by means of the comparison databases to which it has access. Further, if there is considerable solar gain, the return water temperature will rise higher than normal and the preferred controller detects this and adjusts its operating parameters accordingly.

Hence, in preferred embodiments, the controller cross references detected, current water temperature values (preferably both flow and return temperatures) with one or more records of known, or reference, water temperatures values, e.g. from test sites. The controller may also record and make reference to its own specific temperature data compiled and maintained during use of the system to which it is part. By combining stored temperature data with current temperature readings, the controller is able to adjust its operating parameters in accordance with the requirements of the system and other variable factors.

Advantageously, the flow and return temperature values are stored in memory immediately a burner terminates each fire. These temperature values may be used as a template, or reference, value for the next call to fire and these values may be combined with the current monitoring temperature data so that the "knowledge" of the controller may be updated both between fires and during each sequence in the burner firing process. The template values may be cross referenced when a burner run has been terminated. For example, flow value may be compared to return value to ensure that the flow temperature does not get level with the return temperature, even if the system is completely satisfied and all modulating valves are closed.

Further advantageous aspects of the invention will become apparent to those ordinarily skilled in the art upon review of the following description of a specific embodiment and with reference to the accompanying drawings in which:

### Brief Description of the Drawings

An embodiment of the invention is now described by way of example and with reference to the accompanying drawings in which:
Figure 1 is a schematic diagram of a boiler system including a controller embodying one aspect of the present invention;
Figure 2 is a graph illustrating a typical conventional two-stage burner firing sequence and a typical two-stage burner firing sequence under the control of the controller included in Figure 1;
Figure 3 is a graph comparing the frequency of burner cycles for a conventional boiler system against a boiler system including a typical controller embodying the invention; and
Figures 4A to 4F depict a flow chart illustrating an example of the operation of the controller included in Figure 1.

### Detailed Description of the Drawings

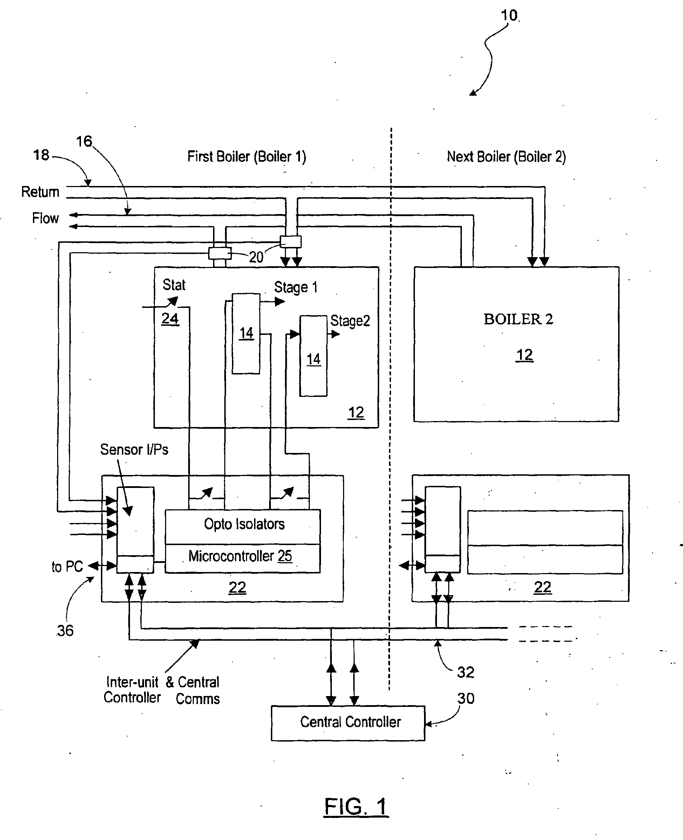

Referring now to Figure 1 of the drawings, there is shown, generally indicated as 10, a block diagram of a typical boiler system. The boiler system 10 comprises one or more boilers 12 (two boilers are shown by way of example only). Each boiler 12, which may more generally be referred to as a medium heating apparatus, includes one or more burners 14, each being capable of single stage or multi-stage firing. The burners 14 may comprise any suitable device for burning fuel (typically oil or gas). In the embodiment of Figure 1, it is assumed, for the purposes of example only, that each boiler implements, or comprises, two burner stages and that each boiler 12 is configured to provide a two stage burner firing sequence, a respective stage being implemented by a respective burner 14 (although alternatively, said two (or more) stages could be implemented by one burner if the burner was a multi-stage burner). In alternative embodiments (not illustrated) the, or each, boiler may have a single stage firing sequence (as is common for domestic boilers and is typically implemented by a single burner) or may support a multi-stage firing sequence in which a single burner, or a respective one of a plurality of burners, provides each firing stage. Each boiler 12 also comprises a combustion area or chamber (not shown) into which fuel is supplied to be burned by the burners 14. The combustion chamber is associated with a vessel (not shown), usually a pipe or chamber, for containing the medium to be heated such that heat generated in the combustion chamber is at least partially transferred to the medium in the associated pipe or chamber.

A flow pipe 16 is connected to each boiler 12 for carrying a heating medium (which in the present example is assumed to comprise water, although other heating media may be used), that has been heated by the boiler, from the boiler 12 to an associated heating system (not shown), for example a network of radiators (not shown). A return pipe 18 is connected to each boiler 12 for carrying the water, or other heating medium, from the associated heating system back to the boiler 12. The water in the flow pipe 16 at or adjacent the boiler 12 may be referred to as "flow water", while the water in the return pipe 18 at or adjacent the boiler may be referred to as the "return water". In the preferred embodiment, the system 10 includes a respective temperature sensor 20 associated with the flow and return pipes 16, 18 at each boiler 12 for monitoring the respective flow and return water (or other medium) temperatures. The temperature of the medium in the flow and/or return pipes may be measured either directly or indirectly.

One or more additional temperature sensors (not shown) may be provided for monitoring indoor (e.g. within the building serviced by the heating system) and/or outdoor ambient air temperature. Advantageously, therefore, the controller is co-operable with means for determining indoor and/or outdoor temperature in order to determine the indoor/outdoor temperature respectively.

The system 10 further includes a control unit, or controller 22, embodying one aspect of the present invention. The controller 10 controls, during use, the activation, or firing sequence, of the burners 14. For example, in response to a call for a stage 1 burner activation, or fire, the controller 22 determines when the stage 1 burner 14 fires and for how long and, in response to a call for stage 2 of the firing sequence, the controller 22 determines when the stage 2 burner 14 fires and for how long.

The controller 22 preferably comprises a suitably programmed microcontroller 25, or other data processor, preferably using a flash based non volatile memory and, for example, CMOS semiconductor devices. The preferred embodiment of the controller 22 may be described as a load compensating and sequence controller arranged to control boilers fitted with single stage burners and/or multi-stage burners. A multi-stage system can use either multiple burners (with a single stage or multi-stage firing capability/sequence) or a single burner with a multi-stage firing capability/sequence.

The call for the or each firing stage may comprise a signal provided by a thermostat, the control panel of the associated heating system, or other control device. The controller 22 includes means for detecting one or more call signals from one or more control devices, e.g. thermostats. In the present example, a thermostat 24 provides the call for stage 1 of the firing sequence by, for example, monitoring the boiler water jacket (not shown) temperature.

As will be described hereinafter, the preferred controller 22 supports the execution of one or more computer programs which use data from the sensors to determine how best to control the firing sequence of the, or each, burner. The controller may be described as self-learning in that operating parameters may be adjusted by the controller in response to data compiled by the controller during use.

In the example of Figure 1, the system 10 uses up to four (preferably digital) temperature sensors, a respective sensor for monitoring flow and return water temperature (sensors 20) and a respective sensor (not shown) for monitoring indoor and outdoor air temperatures. The controller 22 receives a signal (comprising a respective temperature reading) from each temperature sensor. In the preferred embodiment, the controller 22 takes a respective temperature measurement value from each sensor at intervals during the operation of the system 10. The intervals are conveniently regular intervals and may be of, for example, approximately 10 seconds.

Opto-isolated inputs to the controller 22 may be provided to monitor boiler control circuits including flame failure alarm conditions.

An input to the controller 22 may be provided to monitor volt free pulse output fuel meters on oil or gas systems.

It is preferred that the control circuits associated with the controller 22 and boiler 12 utilise volt free relays to provide isolated failsafe switching circuits for each of the firing stages on the boiler/burner.

In some embodiments where the system comprises multiple boilers 12, it is preferred to provide an inter-unit communications system including a central controller 30, preferably with remote access capabilities via, for example, PSTN, ISDN or GSM protocols.

In a multi-boiler system, communications between controllers 22 of respective boilers 12 is advantageously provided so that the status of all boilers 12 in the system 10 may be monitored by all controllers. This allows the respective firing sequence of each boiler 12 to be co-ordinated. The preferred arrangement is such that the multi-boiler system may be treated as a system comprising a single boiler system with multiple firing stages. An industry standard RS485 protocol may conveniently be used to permit multiple controller connections on the same data bus 32.

A communications link 36 to a remote computer, e.g. a PC, (not shown) may also be provided to allow external monitoring and logging of site data. The facility to download all site data logs from the central controller via, for example, PSTN, ISDN or GSM is preferably provided.

In the system 10, boiler No. 2 and its associated controller 22 may be substantially the same as the boiler 12 and controller 12 described above.

During use, water temperatures for the flow and return systems 16, 18 and preferably also air temperatures from indoor and outdoor locations, are monitored by the temperature sensors. The controller 22 records the respective temperature readings at intervals that are conveniently determined by parameters supported by the programming of the controller 22. The controller 22 analyses the temperature readings (as is described in more detail hereinafter) and, depending on a comparison between the current temperature reading(s) and one or more operating parameters (to be described in more detail hereinafter) determines and implements the firing sequence of the, or each, burner stage. In particular, the controller 22 determines when each stage should fire.

At least some of the operating parameters are advantageously adjusted by the controller 22, during use, in response to, for example, detected atmospheric conditions and/or indoor room temperatures. At least some of the operating parameters are advantageously adjusted by the controller 22, during use, in response to, the flow and/or return temperatures detected by the controller 22 during use. In the preferred embodiment, the controller 22 has access to a database or other memory (not shown) comprising a plurality of operating parameter values, each having, or being associated with, one or more data values representing one or more of the following parameters: outdoor temperature; indoor temperature; flow water temperature; return water temperature; rate of change of flow water temperature; rate of change of return water temperature; residual heat peak; time to reach residual heat peak. By using current measurements/calculations based on currently, or recently, detected flow water temperature, return water temperature, indoor temperature and/or outdoor temperature, the controller 22 may look up the database and retrieve one or more corresponding operating parameter values. The controller 22 may then set or adjust one or more of its operating parameters based on the parameter values retrieved from the database. It is further preferred that a respective temperature reading is recorded by the controller 22 at the end of each firing cycle to serve as a reference in its calculations to control the next firing cycle, e.g. as a reference for monitoring the fall in flow and/or return temperatures.

In the preferred embodiment, each burner stage is individually controlled within limits set by adjustable operating parameters that define the minimum and/or maximum rate of flow and/or return water temperature rise and/or fall. A failsafe override parameter may also be included to cater for sudden unforeseen system changes.

In the preferred embodiment, the controller 22 determines when to fire Stage 1 by comparing the measured, or detected, rate of fall in flow and/or return water temperatures against one or more operating parameters whose values specify a threshold for the rate of fall in flow and/or return water temperatures. When the rate specified by the respective operating parameter is not satisfied, e.g. exceeded, then the controller 22 causes Stage 1 to fire. Advantageously, the controller 22 may additionally or alternatively determine when to fire Stage 1 by comparing the detected flow and/or return water temperatures against one or more operating parameters whose values specify a threshold for the flow and/or return water temperatures. Should the threshold exceed the detected flow/return temperature, then stage 1 is fired. The controller 22 may also take into account daily history data enabling the system to identify nodes in the daily pattern, e.g. first time firing in a new heating period or light/heavy load conditions. Stage 1 is connected, or operated, in such a way as to protect the pre-purge safety cycle.

Subsequent firing stages, for example stage 2, are preferably controlled by comparing the detected rate of fall in flow and/or return water temperatures against one or more operating parameters whose values specify a threshold for the rate of fall in flow and/or return water temperatures. When the rate specified by the respective operating parameter is not satisfied, e.g. exceeded, then the controller 22 causes relevant stage to fire.

Estimated firing times to achieve target temperatures plus the analysis of real time periodic readings and reference to flow and return temperature differentials may all be taken into account for each subsequent stage and used to minimise the overall fuel spend with no loss to system environmental conditions or hot water supplies.

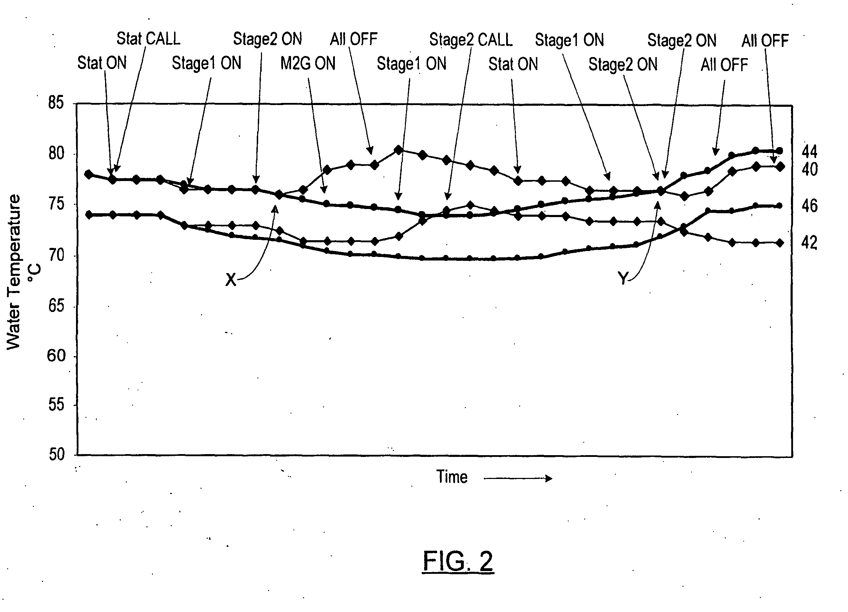

Referring now to Figure 2 by way of example, the graph shows flow and return temperature data 40, 42 recorded for two firing cycles (wherein stage 1 and stage 2 are performed twice) for a conventionally controlled boiler system (not shown) and corresponding flow and return temperature data 44, 46 recorded for the system 10. It can be seen that in the latter case the number of firing cycles is reduced from two to one and the flow and return temperatures are maintained within acceptable operational limits.

Referring now to the conventional flow temperature plot 40 of Figure 2 in more detail, when the flow temperature drops below a thermostat threshold (which in this case is assumed to be 78°C) the thermostat is activated (Stat ON) and this serves as a call for Stage 1 (Stat Call). There is an initial delay to allow the stage 1 burner to purge and then the burner activates to initiate Stage 1 (Stage 1 ON). Subsequently, e.g. after a fixed time delay or after a call from a second thermostat, Stage 2 is activated (Stage 2 ON). The flow temperature then begins to rise rapidly until the thermostat threshold is reached, after which the burner(s) are turned off and Stage 2 is terminated (ALL OFF). The flow temperature continues to rise as a result of residual heat gain and then falls until the thermostat is once again activated (Stat ON) after which the cycle repeats.

Considering now the plot 44 of flow temperature for the system 10, when the thermostat 24 activates (Stat ON) this acts as a call for Stage 1 but burner 14 does not activate Stage 1 immediately after the initial purge period. Rather, the controller 22 monitors the rate at which the flow temperature is falling. When the rate of fall satisfies a condition set by the relevant operating parameter (which parameter is maintained by the controller 22), then the controller 22 causes the burner 14 to implement Stage 1 (M2G ON shows the initiation of Stage 1 while Stage 1 ON indicates when Stage 1 actually fires after the purging period). In the preferred embodiment, this occurs when the rate of fall exceeds a threshold set by the respective operating parameter. The controller 22 may alternatively cause Stage 1 to fire if the detected flow temperature is less than a threshold value (maintained by the controller 22 as a further operating parameter). This is typically applied in situations where the boiler system 10 is activated for the first time after having been idle for a relatively long period (e.g. overnight) - in such situations it is usually desirable to fire Stage 1 as soon as possible after purging. The controller 22 may also take into account the time of day and/or the recorded history of the firing pattern of the system 10 and the history of when the system 10 is activated and de-activated and/or the type of building that the associated heating system is serving. For example, for a domestic household, if the system 10 is first activated at a time, e.g. 6:30 AM, when the occupants are rising, the controller 22 may cause Stage 1, when called, to activate immediately after purging (it is assumed that the occupants are about to get up and so immediate heat is required. If, however, the system 10 is deactivated for most of the day and re-activated at, say, 4PM, then it may be assumed that the re-activation is to heat the house for the occupant's return from work in, say, two hours time, in which case Stage 1 need not be activated immediately. Similarly, should the boiler system 10 for a commercial property be activated at, say 6:30 AM, it may be assumed that the occupants will not arrive until, say, 8:30 AM, in which case Stage 1 need not be activated immediately.

In the above example, the controller 22 makes decisions based on measured flow temperature. It will be understood that the controller may alternatively, or additionally, make such decisions based on the return temperature. It is noted that the respective rate of temperature fall or temperature rise specified by the respective operating parameter in respect of the flow pipe need not necessarily be the same as the respective rate specified for the return pipe.

Referring still to flow temperature plot 44, Stage 2 is called (Stage 2 CALL) after Stage 1 has fired. The Stage 2 call may arise in a variety of ways, e.g. activation of a Stage 2 thermostat (not shown) or after a pre-specified period of time has elapsed. In contrast with the conventional system, the controller 22 does not necessarily fire Stage 2 immediately after the Stage 2 call. Rather, the controller 22 monitors the flow and/or return temperatures, and in particular the rate of change of the flow and/or return temperatures in order to decide when to cause Stage 2 to fire. In the preferred embodiment, the controller 22 compares the rate of change of the flow (and/or return) temperature against a corresponding operating parameter and, depending on the result of the comparison, determines whether or not to fire Stage 2. Typically, the operating parameter specifies a rate of increase for the flow (or return) temperature and, should the controller 22 determine that the measured flow (or return) temperature is not rising at or above the rate specified by the parameter, then Stage 2 is fired. As can be seen from Figure 2, the flow temperature 44 is rising after the Stage 2 call even though Stage 2 has not been fired. This is due to the effects of the Stage 1 fire.

In the preferred embodiment, the controller 22 assesses the flow (and/or return) temperature at a plurality of time intervals during operation of the system 10. For example, in one embodiment the controller 22 makes the assessment at regular intervals of, for example, approximately 10 seconds. During the assessment, the controller 22 compares the measured flow and/or return temperature values against the relevant operating parameter(s) and decides whether or not to cause Stage 1 or Stage 2 (as applicable) to fire. It is further preferred that the controller 22 determines, at a plurality of time intervals during the operation of the system 10, whether or not the relevant operating parameters require to be adjusted. Conveniently, the controller decides whether or not the operating parameter(s) require adjustment in respect of, for example prior to or after, each flow and/or return assessment.

In the preferred embodiment, the controller 22 determines whether or not to adjust the operating parameter(s) depending on one or more of the following factors: detected outdoor temperature; detected indoor temperature; detected flow water temperature; detected return water temperature; detected rate of change of flow water temperature; detected rate of change of return water temperature; detected residual heat peak; detected time to reach residual heat peak. Some these values may be measured or calculated in respect of each assessment period, others may comprise values measured or calculated from a previous assessment period or firing cycle. Using one or more of these detected or calculated values, the controller 22 may refer to the database(s), or other stored reference data, comprising operating parameter values and to adjust the value of the or each relevant operating parameter in accordance with the value(s) specified in the reference data. It is particularly preferred that the controller 22 adjusts the or each operating parameter that specifies the threshold for the rate of rise and/or fall of the flow and/or return temperatures. Thus, the operating parameters may advantageously be adjusted, during use, in accordance with external and/or internal environmental conditions and on the characteristics of the system 10 (as indicated, for example, by the residual heat characteristics).

Referring again to plot 44 of Figure 2, it will be seen that a delay is incurred between the call for Stage 2 and when Stage 2 is fired (Stage 2 ON). After Stage 2 is fired, the flow temperature increases more rapidly until, when the target temperature is reached (as measured for example by the flow or return temperature or thermostat threshold), Stages 1 and 2 are terminated (ALL OFF).

By comparing the plots 40 and 44, it will be seen that, not only does the system 10 require fewer firing cycles in the observed period, but also a significant amount of energy is saved - this energy saving is represented by the area defined between plots 40 and 44 and between points X and Y.

Typically, the burners 14 terminate a firing stage under the control of a control device, for example a thermostat. Alternatively, the controller 22 may be arranged to terminate some or all of the firing stages depending on the rate of temperature change in the floe and/or return pipes.

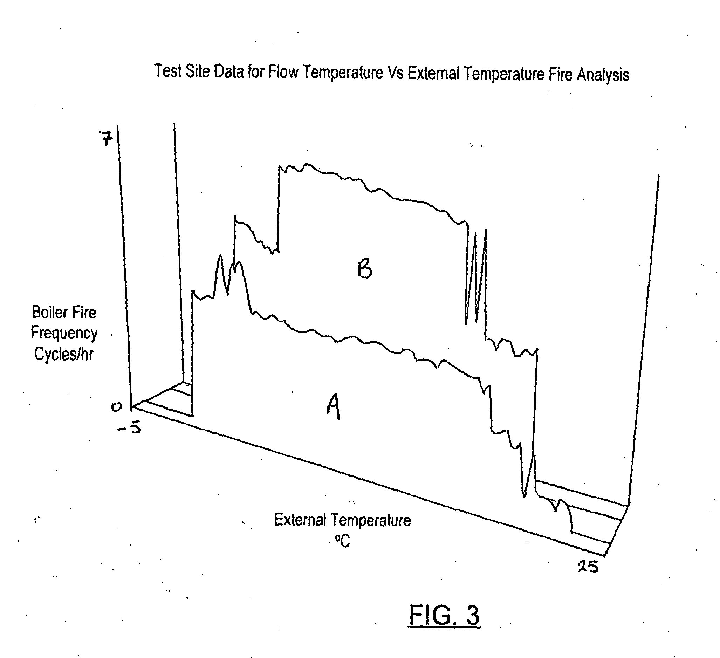

Figure 3 is a chart showing actual history data from a test site and illustrates the reduction in firing occurrences versus ambient temperature during two similar test periods. The cycle frequency, i.e. fires per hour, is illustrated (graph A for the present controller, graph B for conventional control) and can be seen to be reduced by more than 50% for ambient temperatures between 1°C and 16°C.

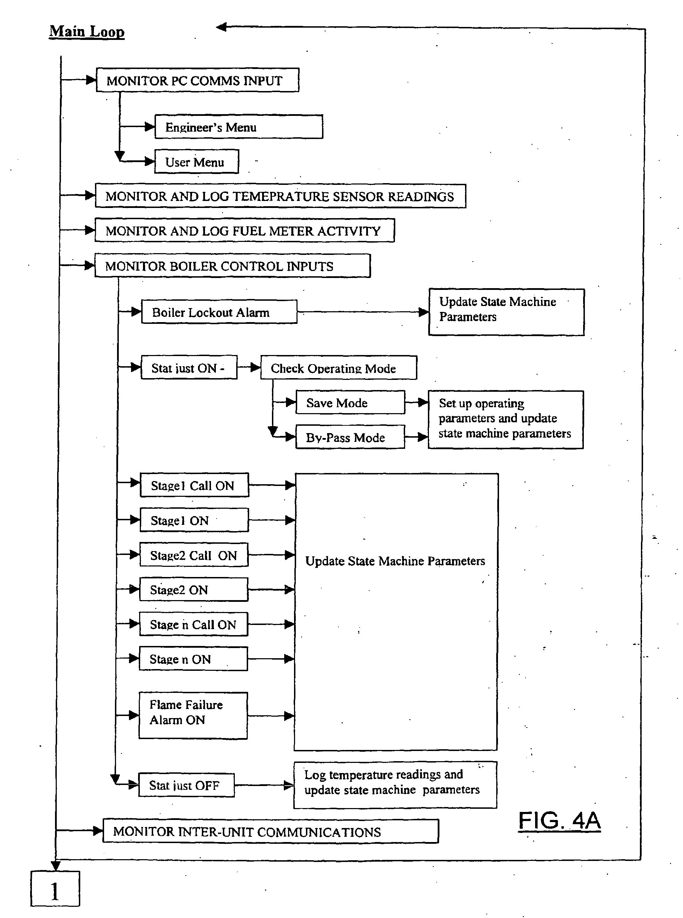

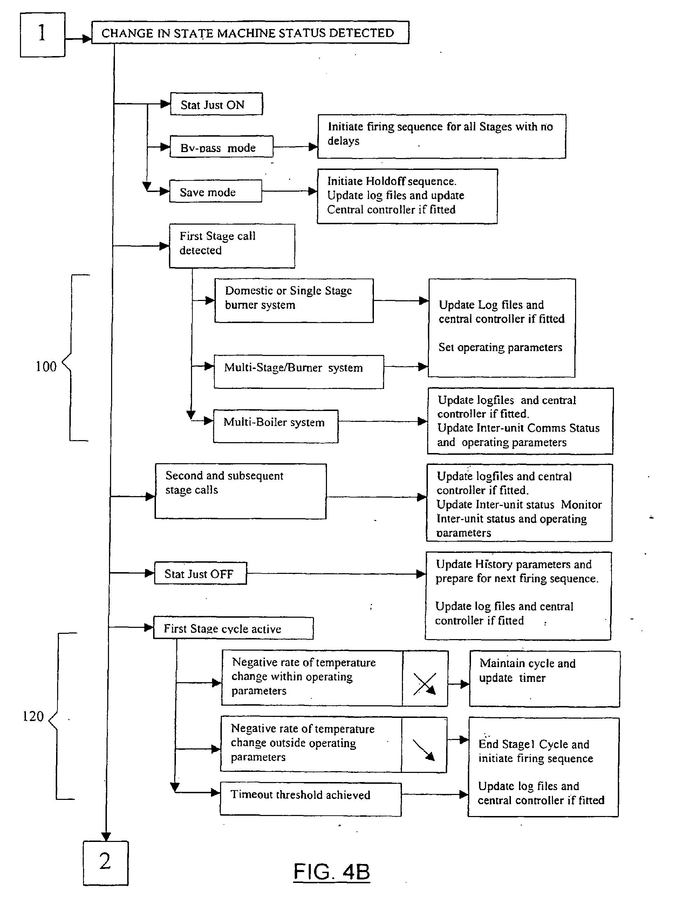

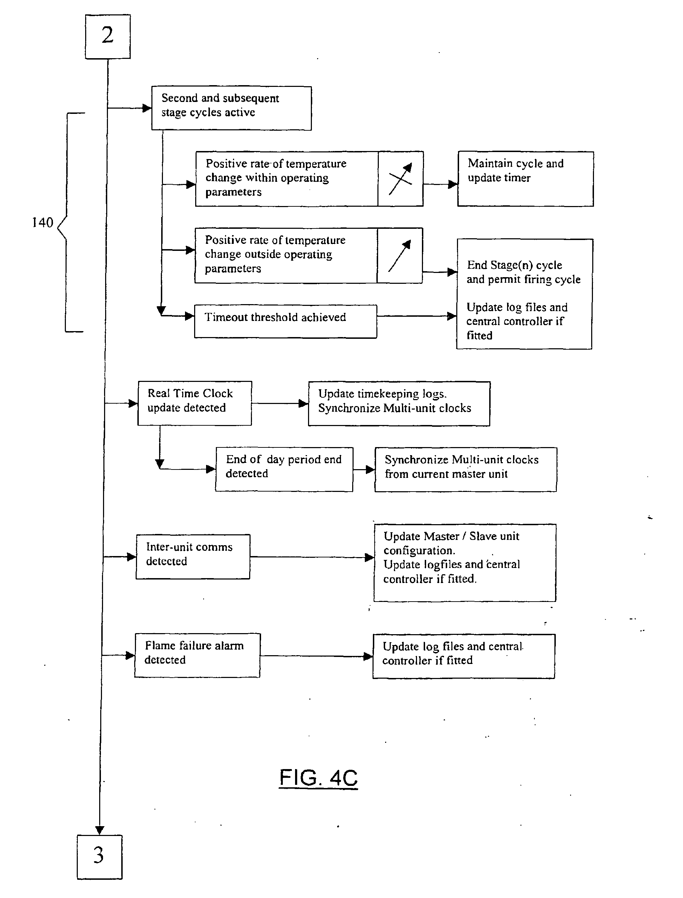

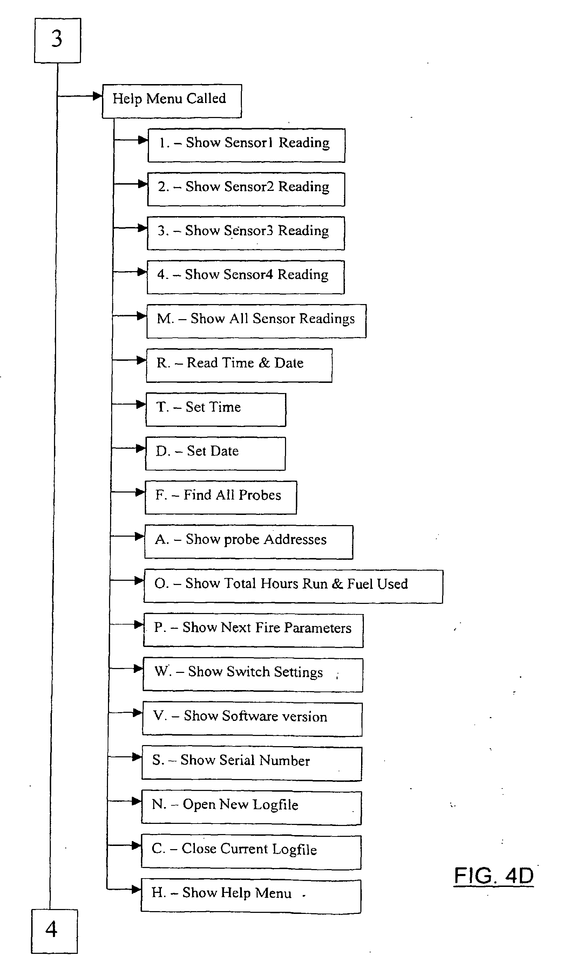

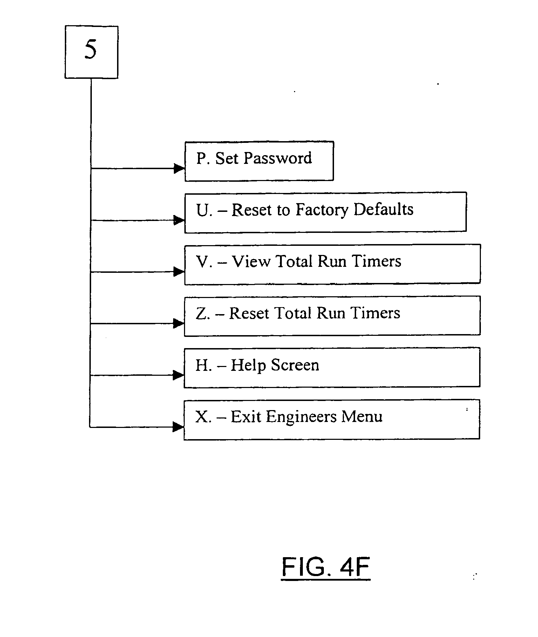

Figures 4A to 4C presents a flow chart illustrating an example of a suitable computer program that may be supported and implemented by the controller 22. It will be seen from the blocks generally indicated as 100, that the operating parameters are set upon detection of a Stage 1 call and upon detection of second and subsequent stage calls.

After Stage 1 is called (blocks indicated as 120), a Stage 1 cycling period (i.e. not firing) is maintained as long as the flow and/or return temperature does not fall at a rate greater than the threshold set by the relevant operating parameter. Once the specified rate of fall is exceeded, the Stage 1 cycling is terminated and Stage 1 firing begins. Stage 1 firing may also begin after a timeout period, irrespective of the rate of fall of the flow/return temperature.

After Stage 2 is called (blocks indicated as 140), a Stage 2 cycling period (i.e. not firing) is maintained as long as the flow and/or return temperature does not rise at a rate lower than the threshold set by the relevant operating parameter. Should the specified rise rate not be satisfied, the Stage 2 cycling is terminated and Stage 2 firing begins. Stage 2 firing may also begin after a timeout period, irrespective of the rate of fall of the flow/return temperature.

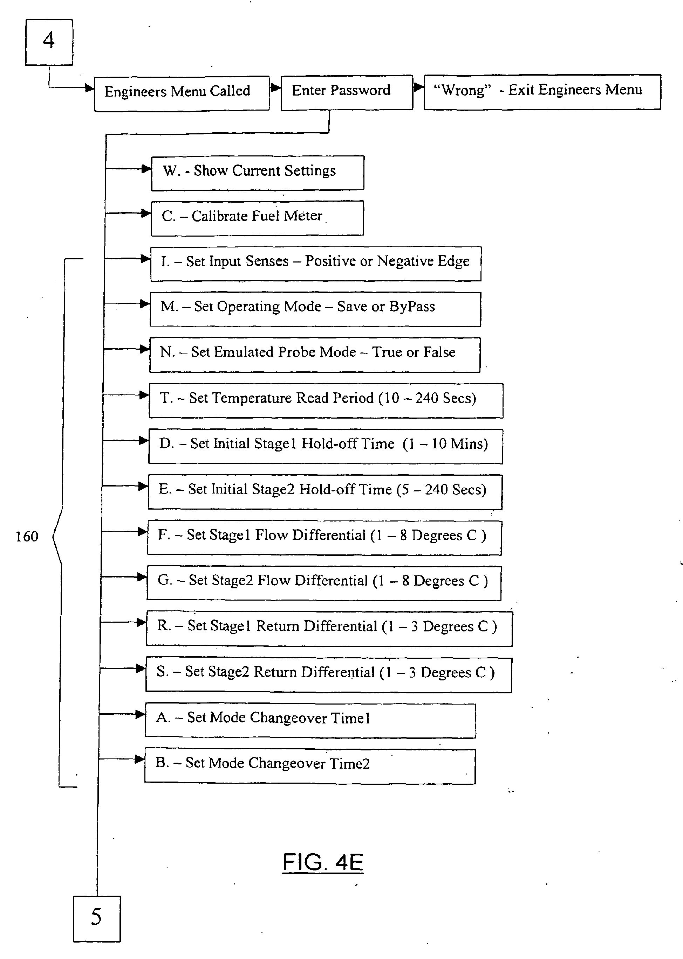

The operating parameters can be adjusted as site data (e.g. temperature readings) is logged and analysed by the controller 22. The illustrated computer program allows default parameter settings to be set manually via the communications port 36 (Figure 4E, blocks indicated as 160). It will be seen that the operating parameters may include: Temperature Read Period - this determines the intervals between each successive round of temperature readings; Initial Stage 1 Hold-Off time - this defines a delay period between Stage 1 being called and Stage 1 being fired; Initial Stage 2 Hold-Off time - this defines a delay period between Stage 2 being called and Stage 2 being fired; Stage 1 flow differential - this is the maximum rate of fall of flow temperature allowed before Stage 1 is fired; Stage 2 flow differential - this is the minimum rate of rise of flow temperature allowed before Stage 2 is fired; Stage 1 return differential - this is the maximum rate of fall of return temperature allowed before Stage 1 is fired; Stage 2 return differential - this is the minimum rate of rise of return temperature allowed before Stage 2 is fired.

It is noted that, during Stage 1 and/or Stage 2, the controller 22 may be configured to give the differential condition precedence over the hold-off times, or vice versa.

The differential parameters may, for example, stipulate a limit for the change in flow/return temperature between successive assessment periods (thereby allowing rate of fall/rise to be assessed). For the flow temperature, the limit is typically between 1 and 8°C, for the return temperature, the limit is typically between 1 and 3°C.

Subsequent firing stages, when present, may be implemented as described for stage 1 or stage 2.

It is preferred that all mains inputs are opto-isolated to provide maximum isolation between input channel, between boilers and between phases on three phase installations.

A dedicated port may also be provided to interface with volt free pulse output oil or gas fuel meters. The controller 22 can be calibrated in the system parameter settings to match different meter outputs.

## Claims

1. A controller (22) for a boiler system (10), the boiler system comprising at least one boiler (12), the, or each, boiler comprising at least one fuel burner (14), the, or each, boiler being associated with a flow pipe (16), by which a heating medium leaves the boiler, and a return pipe (18), by which the heating medium returns to the boiler, and means (20) for monitoring the temperature of the heating medium in the flow pipe and/or in the return pipe, the controller comprising means for detecting a call from one or more control devices, means for causing said at least one burner to be activated, and being arranged for communication with the temperature monitoring means to determine the temperature of the heating medium in the flow pipe and/or in the return pipe, **characterised in that** the controller is arranged to, upon detecting a call to activate said at least one burner, determine the rate of change of the temperature of the medium in the flow pipe and/or in the return pipe, and to cause the at least one burner to be activated depending on said determined rate of change of temperature.

2. A controller as claimed in Claim 1, wherein said controller (22) is arranged to compare said determined rate of change of temperature against at least one operating parameter, and to activate said at least one burner (14) depending on the result of the comparison.

3. A controller as claimed in Claim 2, wherein the controller (22) is arranged to adjust one or more of said operating parameters in response to detected outdoor temperature and/or detected indoor temperature and/or detected residual heat characteristics of the respective boiler and/or detected flow medium temperature and/or detected return medium temperature.

4. A controller as claimed in Claim 1, wherein said at least one fuel burner (14) is operable to implement at least one burner stage and, in respect of a first burner stage, the controller (22) is arranged to compare the rate of change of temperature of the medium in the flow pipe (16) and/or in the return pipe (18) against a respective operating parameter whose value defines a threshold for the rate of fall of temperature, and to cause the first burner stage to be activated when the rate of fall of temperature of the medium in the flow pipe and/or in the return pipe exceeds the rate indicated by said respective operating parameter.

5. A controller as claimed in Claim 4, wherein in respect of a second, or subsequent, burner stage, the controller (22) is arranged to compare the rate of change of temperature of the medium in the flow pipe (16) and/or in the return pipe (18) against a respective operating parameter whose value defines a threshold for the rate of rise of temperature, and to cause the second burner stage to be activated when the rate of rise of temperature of the medium in the flow pipe and/or in the return pipe is below the rate indicated by said respective parameter.

6. A controller as claimed in any preceding claim, wherein said at least one fuel burner (14) is operable to implement at least one burner stage and, in respect of a first burner stage, the controller (22) is arranged to compare the temperature of the medium in the flow pipe (16) and/or in the return pipe (18) against a respective operating parameter whose value defines a threshold temperature, and to cause the first burner stage to be activated when the temperature of the medium in the flow pipe and/or in the return pipe is less than temperature indicated by said respective parameter.

7. A method of controlling the firing of at least one fuel burner in a boiler system (10) comprising at least one boiler (12), the, or each, boiler comprising said at least one fuel burner (14), the, or each, boiler being associated with a flow pipe (16), by which a heating medium leaves the boiler, and a return pipe (18), by which the heating medium returns to the boiler, and means (20) for monitoring the temperature of the heating medium in the flow pipe and/or in the return pipe, **characterised in** the method comprising, determining, upon detecting a call from one or more control devices to activate said at least one burner, the rate of change of the temperature of the medium in the flow pipe and/or in the return pipe; and causing the at least one burner to be activated depending on said determined rate of change of temperature.

8. A boiler system (10) comprising a controller (22) as claimed in Claim 1.

9. A computer program product comprising computer program code for causing a computer to implement the method of Claim 7.

## Patentansprüche

1. Kontroller (22) für ein Boilersystem (10), wobei das Boilersystem mindestens einen Boiler (12) umfasst, wobei der bzw. jeder Boiler mindestens einen Brennstoffbrenner (14) umfasst, der bzw. jeder Boiler mit einer Vorlaufleitung (16), durch die ein Heizmedium den Boiler verlässt, und einer Rücklaufleitung (18), durch die das Heizmedium zum Boiler zurückkehrt, assoziiert ist und Mittel (20) zum Überwachen der Temperatur des Heizmediums in der Vorlaufleitung und/oder in der Rücklaufleitung umfasst, wobei der Kontroller Mittel zum Erfassen eines Aufrufs von einer oder mehreren Steuervorrichtungen und Mittel zum Bewirken, dass der mindestens eine Brenner aktiviert wird, umfasst, und zur Kommunikation mit dem Temperaturüberwachungsmittel angeordnet ist, um die Temperatur des Heizmediums in der Vorlaufleitung und/oder in der Rücklaufleitung zu bestimmen, **dadurch gekennzeichnet, dass** der Kontroller dazu angeordnet ist, beim Erfassen eines Aufrufs, den mindestens einen Brenner zu aktivieren, die Änderungsgeschwindigkeit der Temperatur des Mediums in der Vorlaufleitung und/oder in der Rücklaufleitung zu bestimmen und zu bewirken, dass der mindestens eine Brenner abhängig von der bestimmten Änderungsgeschwindigkeit der Temperatur aktiviert wird.

2. Kontroller nach Anspruch 1, wobei der Kontroller (22) dazu angeordnet ist, die bestimmte Änderungsgeschwindigkeit der Temperatur mit mindestens einem Betriebsparameter zu vergleichen und den mindestens einen Brenner (14) abhängig vom Ergebnis des Vergleichs zu aktivieren.

3. Kontroller nach Anspruch 2, wobei der Kontroller (22) dazu angeordnet ist, einen oder mehrere der Betriebsparameter als Reaktion auf die erfasste Außentemperatur und/oder die erfasste Innentemperatur und/oder erfasste Restwärmecharakteristika des jeweiligen Boilers und/oder die erfasste Vorlaufmediumtemperatur und/oder die erfasste Rücklaufmediumtemperatur einzustellen.

4. Kontroller nach Anspruch 1, wobei der mindestens eine Brennstoffbrenner (14) wirksam ist, mindestens eine Brennerstufe zu implementieren und in Bezug auf eine erste Brennerstufe der Kontroller (22) dazu angeordnet ist, die Änderungsgeschwindigkeit der Temperatur des Mediums in der Vorlaufleitung (16) und/oder in der Rücklaufleitung (18) mit einem jeweiligen Betriebsparameter zu vergleichen, dessen Wert einen Schwellenwert für die Sinkgeschwindigkeit der Temperatur definiert und zu bewirken, dass die erste Brennerstufe aktiviert wird, wenn die Sinkgeschwindigkeit der Temperatur des Mediums in der Vorlaufleitung und/oder in der Rücklaufleitung die vom jeweiligen Betriebsparameter angegebene Geschwindigkeit übersteigt.

5. Kontroller nach Anspruch 4, wobei in Bezug auf eine zweite oder anschließende Brennerstufe der Kontroller (22) dazu angeordnet ist, die Änderungsgeschwindigkeit der Temperatur des Mediums in der Vorlaufleitung (16) und/oder in der Rücklaufleitung (18) mit einem jeweiligen Betriebsparameter zu vergleichen, dessen Wert einen Schwellenwert für die Anstiegsgeschwindigkeit der Temperatur definiert und zu bewirken, dass die zweite Brennerstufe aktiviert wird, wenn die Anstiegsgeschwindigkeit der Temperatur des Mediums in der Vorlaufleitung und/oder in der Rücklaufleitung unter der durch den jeweiligen Parameter angegebenen Geschwindigkeit liegt.

6. Kontroller nach einem der vorangehenden Ansprüche, wobei der mindestens eine Brennstoffbrenner (14) wirksam ist, mindestens eine Brennerstufe zu implementieren und in Bezug auf eine erste Brennerstufe der Kontroller (22) dazu angeordnet ist, die Temperatur des Mediums in der Vorlaufleitung (16) und/oder in der Rücklaufleitung (18) mit einem jeweiligen Betriebsparameter zu vergleichen, dessen Wert einen Temperaturschwellenwert definiert und zu bewirken, dass die erste Brennerstufe aktiviert wird, wenn die Temperatur des Mediums in der Vorlaufleitung und/oder in der Rücklaufleitung geringer ist als die vom jeweiligen Betriebsparameter angegebene Temperatur.

7. Verfahren des Steuerns der Feuerung mindestens eines Brennstoffbrenners in einem Boilersystem (10), das mindestens einen Boiler (12) umfasst, wobei der bzw. jeder Boiler mindestens einen Brennstoffbrenner (14) umfasst, der bzw. jeder Boiler mit einer Vorlaufleitung (16), durch die ein Heizmedium den Boiler verlässt, und einer Rücklaufleitung (18), durch die ein Heizmedium zum Boiler zurückkehrt, assoziiert ist und Mittel (20) zum Überwachen der Temperatur des Heizmediums in der Vorlaufleitung und/oder der Rücklaufleitung umfasst, **dadurch gekennzeichnet, dass** das Verfahren das Bestimmen, beim Erfassen eines Aufrufs von einer oder mehreren Steuervorrichtungen, den mindestens einen Brenner zu aktivieren, der Änderungsgeschwindigkeit der Temperatur des Mediums in der Vorlaufleitung und/oder in der Rücklaufleitung und das Bewirken, dass der mindestens eine Brenner abhängig von der bestimmten Änderungsgeschwindigkeit der Geschwindigkeit aktiviert wird, umfasst.

8. Boilersystem (10), umfassend einen Kontroller (22) nach Anspruch 1.

9. Computerprogrammprodukt, das Computerprogrammcode umfasst, um zu bewirken, dass ein Computer das Verfahrens nach Anspruch 7 implementiert.

## Revendications

1. Régulateur (22) pour un système de chaudière (10), le système de chaudière comportant au moins une chaudière (12), ladite, ou chaque, chaudière comportant au moins un brûleur de combustible (14), ladite, ou chaque, chaudière étant associée à un conduit d'alimentation (16), par lequel un milieu chauffant quitte la chaudière, et un conduit de retour (18), par lequel le milieu chauffant retourne dans la chaudière, et des moyens (20) destinés à surveiller la température du milieu chauffant dans le conduit d'alimentation et/ou dans le conduit de retour, le régulateur comportant des moyens destinés à détecter un appel provenant d'un ou de plusieurs dispositifs de régulation, des moyens destinés à entraîner l'activation dudit au moins un brûleur, et étant conçu à des fins de communication avec les moyens de surveillance de température pour déterminer la température du milieu chauffant dans le conduit d'alimentation et/ou dans le conduit de retour, **caractérisé en ce que** le régulateur est conçu pour, lors de la détection d'un appel à l'activation dudit au moins un brûleur, déterminer le taux de changement de la température du milieu dans le conduit d'alimentation et/ou dans le conduit de retour, et pour entraîner l'activation dudit au moins un brûleur en fonction dudit taux déterminé de changement de température.

2. Régulateur selon la revendication 1, dans lequel ledit régulateur (22) est conçu pour comparer ledit taux déterminé de changement de température par rapport à au moins un paramètre de fonctionnement, et pour activer ledit au moins un brûleur (14) en fonction du résultat de la comparaison.

3. Régulateur selon la revendication 2, dans lequel ledit régulateur (22) est conçu pour ajuster un ou plusieurs desdits paramètres de fonctionnement en réaction à la température extérieure détectée et/ou à la température intérieure détectée et/ou aux caractéristiques de la chaleur résiduelle détectée de la chaudière respective et/ou à la température détectée du milieu chauffant et/ou à la température détectée du milieu retourné.

4. Régulateur selon la revendication 1, dans lequel ledit au moins un brûleur de combustible (14) peut être mis en action pour mettre en oeuvre au moins un étage de brûleur et, relativement à un premier étage de brûleur, le régulateur (22) est conçu pour comparer le taux de changement de température du milieu dans le conduit d'alimentation (16) et/ou dans le conduit de retour (18) par rapport à un paramètre de fonctionnement respectif dont la valeur définit un seuil pour le taux de chute de température, et pour entraîner l'activation du premier étage de brûleur quand le taux de chute de température du milieu dans le conduit d'alimentation et/ou dans le conduit de retour est supérieur au taux indiqué par ledit paramètre de fonctionnement respectif.

5. Régulateur selon la revendication 4, dans lequel relativement à un deuxième étage de brûleur ou ultérieur, le régulateur (22) est conçu pour comparer le taux de changement de température du milieu dans le conduit d'alimentation (16) et/ou dans le conduit de retour (18) par rapport à un paramètre de fonctionnement respectif dont la valeur définit un seuil pour le taux d'augmentation de température, et pour entraîner l'activation du deuxième étage de brûleur quand le taux d'augmentation de température du milieu dans le conduit d'alimentation et/ou dans le conduit de retour est inférieur au taux indiqué par ledit paramètre respectif.

6. Régulateur, selon l'une quelconque des revendications précédentes, dans lequel ledit au moins un brûleur de combustible (14) peut être mis en action pour mettre en oeuvre au moins un étage de brûleur et, relativement à un premier étage de brûleur, le régulateur (22) est conçu pour comparer la température du milieu dans le conduit d'alimentation (16) et/ou dans le conduit de retour (18) par rapport à un paramètre de fonctionnement respectif dont la valeur définit un seuil de température, et pour entraîner l'activation du premier étage de brûleur quand la température du milieu dans le conduit d'alimentation et/ou dans le conduit de retour est inférieure à la température indiquée par ledit paramètre de fonctionnement respectif.

7. Procédé permettant de réguler le démarrage d'au moins un brûleur de combustible dans un système de chaudière (10) comportant au moins une chaudière (12), ladite, ou chaque, chaudière comportant ledit au moins un brûleur de combustible (14), ladite, ou chaque, chaudière étant associée à un conduit d'alimentation (16), par lequel un milieu chauffant quitte la chaudière, et un conduit de retour (18), par lequel le milieu chauffant retourne dans la chaudière, et des moyens (20) destinés à surveiller la température du milieu chauffant dans le conduit d'alimentation et/ou dans le conduit de retour, **caractérisé en ce que** le procédé consiste à déterminer, lors de la détection d'un appel provenant d'un ou de plusieurs dispositifs de régulation permettant d'activer ledit au moins un brûleur, le taux de changement de la température du milieu dans le conduit d'alimentation et/ou dans le conduit de retour ; et à entraîner l'activation dudit au moins un brûleur en fonction dudit taux déterminé de changement de température.

8. Système de chaudière (10) comportant un régulateur (22) selon la revendication 1.

9. Produit de programme informatique comportant un code de programme informatique destiné à entraîner un ordinateur à mettre en oeuvre le procédé selon la revendication 7.
